(19) Europäisches Patentamt
European Patent Office
Office européen des brevets

(11) EP 4 491 642 A1

(12) EUROPEAN PATENT APPLICATION

(43) Date of publication:
**15.01.2025 Bulletin 2025/03**

(21) Application number: **23184991.0**

(22) Date of filing: **12.07.2023**

(51) International Patent Classification (IPC):
***C08F 110/06*** *(2006.01)* ***C08F 4/6592*** *(2006.01)*
***C08F 4/659*** *(2006.01)*

(52) Cooperative Patent Classification (CPC):
(C-Sets available)
**C08F 110/06;** C08F 4/65908; C08F 4/65912;
C08F 4/65916; C08F 4/65927; C08F 2420/06
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**

(74) Representative: **TBK**
**Bavariaring 4-6**
**80336 München (DE)**

# (54) LOW STRESS WHITENING POLYPROPYLENE HOMOPOLYMER COMPOSITION

(57) The present invention provides a novel polypropylene homopolymer composition suitable for small appliances, which comprises 95.00 to 99.99 wt% of a specific single site catalyzed polypropylene homopolymer and 0.01 to 5.00 wt% of specific additive(s) shifting the trade-off relationship in terms of optical and mechanical properties.

EP 4 491 642 A1

(52) Cooperative Patent Classification (CPC): (Cont.)

C-Sets
**C08F 110/06, C08F 2/001;**
**C08F 110/06, C08F 4/6492;**
**C08K 5/098, C08L 23/12;**
**C08K 5/103, C08L 23/12;**
**C08K 5/1345, C08L 23/12;**
**C08K 5/372, C08L 23/12;**
**C08K 5/526, C08L 23/12;**
C08F 110/06, C08F 2500/12, C08F 2500/35;
C08F 110/06, C08F 2500/12, C08F 2500/35,
C08F 2500/34, C08F 2500/30

## Description

### Background of the Invention

The present invention relates to a polypropylene homopolymer (PPH) composition containing a specific single site catalyzed (SSC) polypropylene homopolymer (SSC PPH) and additives providing a combination of good mechanical properties, lower stress whitening (SW) sensitivity and low migration.

Due to its numerous good properties, polypropylene has become one of the most widespread plastics and is widely used everywhere, from film, fiber, thin wall packaging (TWP), to small and major appliances. Due to the wide range of applications, constantly increasing demands are placed on the material, resulting in a constant improvement and expansion of the property profile. One of the disadvantages that polypropylene (PP) has is the occurrence of stress whitening (SW), also called "blush", which occurs under tensile or impact loading and deteriorates the esthetic qualities of a product. This effect occurs with numerous PP grades, both PP homopolymer and copolymer and also with multiphase systems, such as heterophasic copolymers and can severely hamper technical applicability, since SW can occur even with minor impact loads.

Various approaches are already known from the literature to eliminate or reduce the effect. The majority of studies regarding the SW effect have been done on multiphase systems like PP impact copolymers or compounds, while less is known regarding the SW effect in PP homopolymer. Mechanistically, SW is described as a cavitation effect related to the energy absorption in the material occurring in and around e.g. elastomer particles in heterophasic copolymers, while in single-phase systems microcracks are known to develop between crystalline regions. It is also known that loading conditions, such as strain rate, influence SW in PP homopolymer. So far, nucleation is assumed to have a negative effect on SW resistance in PP homopolymer, while increasing comonomer content in PP copolymers, such as ethylen-propylen-random-copolymers (EP-RACO) improves SW resistance.

EP 0768338 B1 relates to a blend of polypropylenes having a reduced tendency to SW, containing (A) from 70 to 95% by weight of a highly isotactic polypropylene having an isotactic index of more than 90 and a melt flow index between 0.1 and 100 g/ 10 min, it being possible for the polypropylene to be a homopolymer of propylene or a copolymer of propylene with one or more $\alpha$-olefins, having a propylene content of at least 50 mol%, and as a low crystallinity modifier (B) from 5 to 30% by weight of a highly amorphous polypropylene having a crystalline polypropylene fraction of up to 10% by weight with an enthalpy of fusion of not more than 40 J/g and a melt flow index between 0.1 and 100 g/10 min, it being possible for the polypropylene to be a homopolymer of propylene or a copolymer of propylene with one or more $\alpha$-olefins, having a propylene content of at least 80 mol%.

WO 2020/104145 A1 relates to a polypropylene composition comprising (a) a propylene homopolymer (PPH) and as a modifier (b) a propylene copolymer (PPC) of propylene and 1-hexene, wherein the propylene copolymer (PPC) has an overall 1-hexene content in the range of 3.8 to 10.0 wt% and a xylene soluble content (XCS) in the range of 8.0 to 30.0 wt%, wherein the weight ratio of the propylene copolymer (PPC) to the propylene homopolymer (PPH) is in the range of 10/90 to 45/55.

The disadvantage of the present approaches to deal with SW resistance including copolymers, blends, heterogenic systems and/or modifiers known so far, however, is that a more elaborate manufacturing and/or use of special modifiers is required, leading to higher costs. In addition, these approaches are not replying on the benefits of pure polyolefin compositions with good recyclability (sorting accuracy). Further, the used modifiers can cause a change and deterioration of the mechanical properties and increased migration.

Regarding PP homopolymer, there is conventionally a contradiction between better SW and mechanical properties, especially in terms of flexural modulus (FM). For example, it is known that for single-phase polymers (homopolymers) the SW is related to crystallinity, while lower crystallinity meaning lower SW sensitivity. This, however, is obviously at the cost of stiffness (FM), which is not in favourable for most final applications.

Hence, due to the demanding and aiming at improved products, e.g. lower migration for hygiene and health, and lower stress whitening for better appearance and lifetime of finished products with good recyclability and good mechanical properties, there is a need for new and improved PP material.

### Object of the invention

It is therefore the object of the present invention to provide a polypropylene homopolymer (PPH) composition based on a PP homopolymer that can be produced in a simple and cost-efficient manner, prevents or significantly reduces the tendency to SW, while the mechanical properties of the material, especially in terms of flexural modulus, should not be deteriorated, and which shows low migration and high recyclability. It is a further object of the present invention to use the PPH composition for producing an article by molding, especially by injection molding, and an article, comprising the PPH composition, wherein the article is a molded article, especially an injection molded article, and wherein the article may be selected from major appliances and small appliances.

Unexpectedly, this technical object has been solved by providing the present polypropylene homopolymer (PPH) composition, and its use for an article and the article comprising the same, which PPH composition essentially consists of, i.e. at least 95.00 to 99.99 wt%, a polypropylene homopolymer being produced by using a specific single site catalyst advantageously applying a two-stage polymerization process, to thereby meet specific requirements, and which contains favorable specific additives, thereby leading to a resultant PPH composition satisfying specified requirements.

That is, the present invention according to claim 1 relates to a PPH composition suitable for small appliances, which comprises

(A) 95.00 to 99.99 wt% based on the PPH composition of a single site catalyzed (SSC) polypropylene homopolymer (SSC PPH), wherein the SSC PPH has

- a xylene cold solubles (XCS) content (25°C, ISO 16152) of 0.1 to 1.5 wt%,
- a melt flow rate ($MFR_2$) (230°C, 2.16 kg, ISO 1133) of 0.1 to 40.0 g/10min,
- a melting temperature (Tm) (DSC) of 149.0 to 160.0°C, and
- regio-defects ($^{13}$C-NMR spectroscopy) in an amount of 0.05 to 1.20 mol%,

(B) 0.01 to 5.00 wt% based on the PPH composition of additive(s) selected from the group consisting of antioxidant(s), acid scavenger(s), UV-stabilizer(s), antistatic agent(s), and slip agent(s), and mixtures thereof,
wherein the PPH composition has

- a $MFR_2$ (230°C, 2.16 kg, ISO 1133) of 0.2 to 40.0 g/10min,
- a Tm (DSC) of 152.0 to 162.0°C,
- a flexural modulus (FM) (ISO 178) of more than 1300 MPa to 1700 MPa or less,
- a stress whitening (SW) intensity, as determined according to the description, of 0 or more and less than 3.0, and
- a fogging (ISO 75201, method B) of 0.10 or more and less than 0.90 mg.

The present invention further relates to the use of the polypropylene homopolymer (PPH) composition for producing an article by molding, preferably by injection molding.

The present invention further relates to an article, comprising the PPH composition, wherein the article may be a molded article, preferably an injection molded article, and wherein the article is more preferably selected from major appliances and small appliances, most preferably small appliances.

Preferred embodiments of the invention are depicted in the dependent claims and a detailed description of the invention is provide in the following description.

## Brief description of the drawings

Fig. 1 is a schematic representation of experimental set up for SW measurement.

Fig. 2 is a schematic diagram of the function recorded during SW experiment.

## Detailed description

## Polypropylene homopolymer (PPH) composition

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

The present invention relates to a polypropylene homopolymer (PPH) composition suitable for small appliances, which comprises (A) 95.00 to 99.99 wt% based on the PPH composition of a single site catalyzed (SSC) polypropylene

homopolymer (SSC PPH), wherein the SSC PPH has

- a xylene cold solubles (XCS) content (25°C, ISO 16152) of 0.1 to 1.5 wt%,
- a melt flow rate ($MFR_2$) (230°C, 2.16 kg, ISO 1133) of 0.1 to 40.0 g/10min,
- a melting temperature (Tm) (DSC) of 149.0 to 160.0°C, and
- regio-defects ($^{13}C$-NMR spectroscopy) in an amount of 0.05 to 1.20 mol%, (B) 0.01 to 5.00 wt% based on the PPH composition of additive(s) selected from the group consisting of antioxidant(s), acid scavenger(s), UV-stabilizer(s), antistatic agent(s), and slip agent(s), and mixtures thereof,

wherein the PPH composition has

- a $MFR_2$ (230°C, 2.16 kg, ISO 1133) of 0.2 to 40.0 g/10min,
- a Tm (DSC) of 152.0 to 162.0°C,
- a flexural modulus (FM) (ISO 178) of more than 1300 MPa to 1700 MPa or less,
- a stress whitening (SW) intensity, as determined according to the description, of 0 or more and less than 3.0, and
- a fogging (ISO 75201, method B) of 0.10 or more and less than 0.90 mg.

That is, the PPH composition in accordance with the present invention comprises the components (A) (SSC PPH) and (B) (additive(s)) and optionally other component(s) (C). The requirement applies that the components (A) and (B) and, if present, the optional other component(s) (C) add up to 100 wt%. This means for example in case that only components (A) and (B) are present, these components add up to 100 wt%, but in case that components (A), (B) and (C) are present, components (A), (B) and (C) add up to 100 wt%. The defined ranges of the indications of quantity for the individual components (A) and (B) are to be understood such that an arbitrary quantity for each of the individual components can be selected within the specified ranges provided that the proviso is satisfied that the sum of all the components (A) and (B) and optionally component(s) (C) add up to 100 wt%. Further, as apparent from the word "propylene homopolymer" the present invention does not aim at a composition of different polymers. Accordingly, the PPH composition comprises additive(s) and optionally other component(s) (C) but preferably no other polymer components than the SSC PPH.

The present invention can achieve the herein described envisaged beneficial technical effects by providing a PPH composition which consists of the component (A), i.e. the SSC PPH which is a polypropylene homopolymer in which only propylene units are detectable (e.g. determined with $^{13}C$ NMR spectroscopy), and the component (B), i.e. the specified additive(s), each provided in the respective claimed amounts adding up to 100wt% in sum. However, a skilled person and the present invention appreciates modifications e.g. in that the PPH composition comprises the components (A) and (B) and further contains optional component(s) (C), as long as the claimed requirements of the individual constituents as well as that of the PPH composition are satisfied. Further, the homopolymer may contain trace amounts of contaminate comonomers, e.g. alpha-olefin comonomers and the term homopolymer, as used herein, refers to a propylene polymer containing at least 99.0 wt%, preferably at least 99.8 wt%, more preferably of at least 99.9 wt%, most preferably 100 wt% of propylene units (e.g. determined with $^{13}C$ NMR spectroscopy), as long as the claimed requirements of the individual constituents as well as that of the PPH composition are satisfied. In any case, the SSC PPH is preferably a polypropylene homopolymer in which only propylene units are detectable (e.g. determined with $^{13}C$ NMR spectroscopy) and the PPH composition preferably does not contain other polymer components than the SSC PPH.

The polypropylene homopolymer (PPH) composition according to the invention comprises at least 95.00 wt% and at most 99.99 wt%, based on the total weight the PPH composition, of the SSP PPH (A) as described above (which will be described in more details below). In preferred embodiments of the invention, the PPH composition comprises at least 97.00 wt%, more preferably at least 98.00 wt%, more preferably at least 98.50 wt%, and comprises at most 99.70 wt%, more preferably at most 99.50 wt%, more preferably at most 99.30 wt% of SSP PPH (A) based on the total weight the PPH composition. It is to be understood that each combination of lower and upper limit(s) as given above is regarded as being disclosed and this general principle applies throughout the entire application to other mentioned lower and upper limits. Likewise, if various ranges are indicated, the lower and upper limit(s) of the various ranges can be suitable combined to form another range. For example, the PPH composition according to the invention can comprise the SSC PPH in an amount of e.g. 97.00 to 99.99 wt%, preferably 97.00 to 99.70 wt%, more preferably 98.00 to 99.50 wt%, even more preferably 98.50 to 99.30 wt%, based on the total weight the PPH composition.

The polypropylene homopolymer (PPH) composition according to the invention comprises at least 0.01 wt% and at most 5.00 wt%, based on the total weight the PPH composition, of additive(s) (B) as described above (which will be described in more details below). In preferred embodiments of the invention, the PPH composition comprises at least 0.30 wt%, more preferably at least 0.50 wt%, more preferably at least 0.70 wt%, and comprises at most 3.00 wt%, more preferably at most 2.00 wt%, more preferably at most 1.50 wt% of the additive(s) (B) based on the total weight the PPH composition. Hence, applying the above general principle, the polypropylene homopolymer (PPH) composition can

comprise the additive(s) (B) in e.g. an amount of 0.30 to 5.00 wt%, preferably 0.30 to 3.00 wt%, more preferably 0.50 to 2.00 wt%, more preferably 0.70 to 1.50 wt% based on the total weight of the PPH composition.

The optional component(s) (C), if present, may thus be added in an amount supplementing the respective amounts of components (A) and (B) so that the sum of (A) to (C) adds up to 100 wt% applying the above proviso.

The preparation of the PPH composition is in the skilled knowledge and the PPH composition can for instance be obtained by mixing the SSC PPH (A) with the additive(s) (B) and optional component(s) (C), or the additive(s) (B) and/or optional component(s) (C) may in the individual case be added already during the polymerization of the SSC PPH. For mixing, a conventional compounding or blending apparatus, such as e.g. a Banbury® mixer, a 2-roll rubber mill, Buss-co-kneader, a single screw extruder with special mixing segments or a twin screw extruder may be used. The PPH composition recovered from e.g. the extruder can be in the form of pellets or in a powdery state.

The polypropylene homopolymer (PPH) composition is characterized in having

- a $MFR_2$ (230°C, 2.16 kg, ISO 1133) of 0.2 to 40.0 g/10min,
- a Tm (DSC) of 152.0 to 162.0°C,
- a flexural modulus (FM) (ISO 178) of more than 1300 MPa to 1700 MPa or less,
- a stress whitening (SW) intensity, as determined according to the description, of 0 or more and less than 3.0, and
- a fogging (ISO 75201, method B) of 0.10 or more and less than 0.90 mg.

That is, the PPH composition of the present invention does not contain any components (A) and (B), and/or other component(s) (Components (C)) which impair with attaining these essential characteristics.

According to a preferred embodiment, the $MFR_2$ (230°C, 2.16 kg, ISO 1133) of the PPH composition is 2.0 to 35.0 g/10min, more preferably 4.0 to 32.0 g/10min, even more preferably 8.0 to 30.0 g/10min, most preferably 12.0 to 28.0 g/10min. Within these ranges, the effects of the present invention are more pronounced.

According to a preferred embodiment, the Tm (DSC) of the PPH composition is 152.0 to 161.0°C, preferably 153.0 to 160.0°C. Within these ranges, the effects of the present invention are more pronounced.

According to a preferred embodiment, the FM (ISO 178) is 1350 to 1650 MPa, preferably 1400 to 1600 MPa, more preferably 1450 to 1550 MPa, most preferably 1480 to 1520 MPa. Within these ranges, the effects of the present invention are more pronounced.

According to a preferred embodiment, the fogging (ISO 75201, method B) is 0.10 to 0.80 mg, preferably 0.20 to 0.75 mg, more preferably 0.30 to 0.70 mg. Within these ranges, the effects of the present invention are more pronounced.

According to a preferred embodiment, the crystallization temperature (Tc) (DSC) is 112.0 to 130.0°C, preferably 113.5 to 125.0°C, more preferably 115.0 to 123.0°C, most preferably 117.0 to 121.0°C. Within these ranges, the effects of the present invention are more pronounced.

According to a preferred embodiment, the melt enthalpy (Hm) (DSC) is 95.0 to 110.0 J/g, preferably 98.0 to 107.0 J/g, more preferably 99.0 to 105.0 J/g, most preferably 100.0 to 103.0 J/g. Within these ranges, the effects of the present invention are more pronounced.

Needless to say that each of the above properties (i.e. $MFR_2$, Tm, FM, fogging, Tc, and Hm) may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

Having said that, it is apparent that the PPH composition preferably has

- a $MFR_2$ (230°C, 2.16 kg, ISO 1133) of 2.0 to 35.0 g/10min, more preferably 4.0 to 32.0 g/10min, more preferably 8.0 to 30.0 g/10min, most preferably 12.0 to 28.0 g/10min, and
- a Tm (DSC) of 152.0 to 161.0°C, more preferably 153.0 to 160.0°C, and
- a FM (ISO 178) of 1350 to 1650 MPa, more preferably 1400 to 1600 MPa, even more preferably 1450 to 1550 MPa, most preferably 1480 to 1520 MPa, and
- a SW intensity of 0.1 to 2.5, more preferably 0.2 to 2.0, even more preferably 0.2 to 1.5, most preferably 0.2 to 1.0, and
- a fogging (ISO 75201, method B) of 0.10 to 0.80 mg, more preferably 0.20 to 0.75 mg, most preferably 0.30 to 0.70 mg, and
- a crystallization temperature (Tc) (DSC) of 112.0 to 130.0°C, more preferably 113.5 to 125.0°C, more preferably 115.0 to 123.0°C, most preferably 117.0 to 121.0°C, and
- melt enthalpy (Hm) (DSC) of 95.0 to 110.0 J/g, more preferably 98.0 to 107.0 J/g, more preferably 99.0 to 105.0 J/g, most preferably 100.0 to 103.0 J/g;

more preferably has

- a $MFR_2$ (230°C, 2.16 kg, ISO 1133) of 8.0 to 30.0 g/10min, preferably 12.0 to 28.0 g/10min, and
- a Tm (DSC) of 153.0 to 160.0°C, and
- a FM (ISO 178) of 1450 to 1550 MPa, preferably 1480 to 1520 MPa, and
- a SW intensity of 0.1 to 2.0, preferably 0.2 to 1.5, more preferably 0.2 to 1.0, and
- a fogging (ISO 75201, method B) of 0.20 to 0.75 mg, preferably 0.30 to 0.70 mg, and
- a crystallization temperature (Tc) (DSC) of 115.0 to 123.0°C, preferably 117.0 to 121.0°C, and
- melt enthalpy (Hm) (DSC) of 99.0 to 105.0 J/g, preferably 100.0 to 103.0 J/g; and

most preferably has

- a $MFR_2$ (230°C, 2.16 kg, ISO 1133) of 12.0 to 28.0 g/10min, and
- a Tm (DSC) of 153.0 to 160.0°C, and
- a FM (ISO 178) of 1480 to 1520 MPa, and
- a SW intensity of 0.2 to 1.0, and
- a fogging (ISO 75201, method B) of 0.30 to 0.70 mg, and
- a crystallization temperature (Tc) (DSC) of 117.0 to 121.0°C, and
- melt enthalpy (Hm) (DSC) of 100.0 to 103.0 J/g.

**Single site catalyzed (SSC) polypropylene homopolymer (SSC PPH)**

The PPH composition of the present invention essentially requires the presence of a single site catalyzed (SSC) polypropylene homopolymer (SSC PPH). A single site catalyzed (SSC) polypropylene homopolymer (SSC PPH) according to this invention is defined as a PPH, which has been produced in the presence of a single site catalyst, which is preferentially a metallocene catalyst as defined in more details below.

There exists a crucial difference in the chain-microstructure between PPs produced by a single site catalyst such as a metallocene catalyst and a Ziegler-Natta catalyst. The chain regularity of metallocene-based polypropylene is reduced by stereo- and regio-defects, whereas the chain regularity of Ziegler-Natta based polypropylenes is only reduced by stereo defects. It is essential that the present polypropylene homopolymer (PPH) is obtained in the presence of a single site polymerization catalyst, preferably a specific metallocene-type catalyst, which is preferably supported, yielding the SSC PPH, being an isotactic PPH with moderate amounts of regio-defects.

In that the polypropylene homopolymer is produced by using specifically a single site catalyst advantageously applying a specific supported metallocene-type catalyst more preferably applying a two-stage polymerization process, the present invention can provide a SSC PPH meeting specific requirements, such that the SSC PPH is characterized in having

- a xylene cold solubles (XCS) content (25°C, ISO 16152) of 0.1 to 1.5 wt%,
- a melt flow rate ($MFR_2$) (230°C, 2.16 kg, ISO 1133) of 0.1 to 40.0 g/10min,
- a melting temperature (Tm) (DSC) of 149.0 to 160.0°C, and
- regio-defects ($^{13}C$-NMR spectroscopy) in an amount of 0.05 to 1.20 mol%.

That is, the polypropylene homopolymer (SSC PPH) is characterized by having a low content of solubles in cold xylene (XCS) of 0.1 to 1.5 wt%. Said XCS content is preferably 1.2 wt% or less, preferably 0.9 wt% or less, more preferably 0.7 wt% or less, more preferably 0.4 wt% or less, most preferably 0.3 wt% or less. A lower limit for said content of xylene cold solubles (XCS) is 0.1 wt%. Within these ranges, the effects of the present invention are more pronounced.

The SSC PPH is further characterized by having a suitable melt flow rate $MFR_2$ (230°C, 2.16 kg, ISO 1133) of 0.1 to 40.0 g/10min. Said $MFR_2$ (230°C, 2.16 kg, ISO 1133) is preferably 2.5 to 36.0 g/10min, more preferably 4.5 to 33.0 g/10min, even more preferably 8.5 to 31.0 g/10min, most preferably 15.0 to 29.0 g/10min. Within these ranges, the effects of the present invention are more pronounced.

The SSC PPH is further characterized by having a moderate melting temperature (Tm) (DSC) of 149.0 to 160.0°C. Said Tm (DSC) is preferably 149.0 to 158.0°C, more preferably 150.0 to 157.0°C, most preferably 151.0 to 155.0°C. Within these ranges, the effects of the present invention are more pronounced.

The SSC PPH is further characterized by showing regio-defects ($^{13}C$-NMR spectroscopy) in a moderate amount of 0.05 to 1.20 mol%. The term "regio-defects" in the present invention defines the sum of 2,1 erythro regio-defects, 2,1 threo regio-defects and 3,1 regio-defects and the term "2,1 regio-defects" defines the sum of 2,1 erythro regio-defects and 2,1 threo regio-defects. In the present invention, the regio-defects of the SSC PPH are preferably 2,1 regio-defects, more preferably 2,1 erythro regio-defects. Said regio-defects ($^{13}C$-NMR spectroscopy) are preferably present in an amount of 0.30 to 1.10 mol%, preferably 0.40 to 1.00 mol%, more preferably 0.60 to 1.00 mol%, most preferably 0.70 to 0.90 mol%. Within these ranges, the effects of the present invention are more pronounced.

The SSC PPH preferably is further characterized by a polydispersity MWD (GPC) in the range of 2.0 to 5.5, preferably 2.5 to 5.0, more preferably 3.0 to 4.0. Within these ranges, the effects of the present invention are more pronounced.

That is, the polypropylene homopolymer (PPH) composition of the present invention preferably contains a SSC PPH having

- a XCS content (25°C, ISO 16152) of 1.2 wt% or less, preferably 0.9 wt% or less, more preferably 0.7 wt% or less, even more preferably 0.4 wt% or less, most preferably 0.3 wt% or less, and/or
- a $MFR_2$ (230°C, 2.16 kg, ISO 1133) of 2.5 to 36.0 g/10min, preferably 4.5 to 33.0 g/10min, more preferably 8.5 to 31.0 g/10min, most preferably 15.0 to 29.0 g/10min, and/or
- a Tm of 149.0 to 158.0°C, preferably 150.0 to 157.0°C, more preferably 151.0 to 155.0°C, and/or
- a polydispersity MWD (GPC) in the range of 2.0 to 5.5, preferably 2.5 to 5.0, more preferably 3.0 to 4.0, and/or
- regio-defects ($^{13}C$-NMR spectroscopy) in an amount of 0.30 to 1.10 mol%, preferably 0.40 to 1.00 mol%, more preferably 0.60 to 1.00 mol%, most preferably 0.70 to 0.90 mol%.

Applying the above general principle regarding properties in connection with (preferred) quantifications, it is apparent that the SSC PPH preferably has

- a XCS content (25°C, ISO 16152) of 1.2 wt% or less, preferably 0.9 wt% or less, more preferably 0.7 wt% or less, more preferably 0.4 wt% or less, most preferably 0.3 wt% or less, and
- a $MFR_2$ (230°C, 2.16 kg, ISO 1133) of 2.5 to 36.0 g/10min, preferably 4.5 to 33.0 g/10min, more preferably 8.5 to 31.0 g/10min, most preferably 15.0 to 29.0 g/10min, and
- a Tm of 149.0 to 158.0°C, preferably 150.0 to 157.0°C, more preferably 151.0 to 155.0°C, and
- a polydispersity MWD (GPC) in the range of 2.0 to 5.5, preferably 2.5 to 5.0, more preferably 3.0 to 4.0, and
- regio-defects ($^{13}C$-NMR spectroscopy) in an amount of 0.30 to 1.10 mol%, preferably 0.40 to 1.00 mol%, more preferably 0.60 to 1.00 mol%, most preferably 0.70 to 0.90 mol%;

more preferably has

- a XCS content (25°C, ISO 16152) of 0.7 wt% or less, preferably 0.4 wt% or less, more preferably 0.3 wt% or less, and
- a $MFR_2$ (230°C, 2.16 kg, ISO 1133) of 8.5 to 31.0 g/10min, preferably 15.0 to 29.0 g/10min, and
- a Tm of 150.0 to 157.0°C, preferably 151.0 to 155.0°C, and
- a polydispersity MWD (GPC) in the range of 2.5 to 5.0, preferably 3.0 to 4.0, and
- regio-defects ($^{13}C$-NMR spectroscopy) in an amount of 0.40 to 1.00 mol%, preferably 0.60 to 1.00 mol%, more preferably 0.70 to 0.90 mol%;

and most preferably has

- a XCS content (25°C, ISO 16152) of 0.4 wt% or less, preferably 0.3 wt% or less, and
- a $MFR_2$ (230°C, 2.16 kg, ISO 1133) of 15.0 to 29.0 g/10min, and
- a Tm of 151.0 to 155.0°C, and
- a polydispersity MWD (GPC) in the range of 3.0 to 4.0, and
- regio-defects ($^{13}C$-NMR spectroscopy) in an amount of 0.60 to 1.00 mol%, preferably 0.70 to 0.90 mol%.

The polymerization of propylene by essentially using a single site polymerization catalyst may be effected in one or more, e.g. 1, 2 or 3, polymerization reactors, using conventional polymerization techniques, e.g. gas phase, solution phase, slurry or bulk polymerization. A combination of slurry (or bulk) and at least one gas phase reactor (GPR) is preferred, particularly with the reactor sequence in the order of a slurry (or bulk) reactor and one or more, more preferably one, gas GPR, preferably with a pre-polymerization reactor prior to the slurry (or bulk) reactor. That is, the PPH composition may contain just one polypropylene polymer component (i.e. prepared in a single step polymerization process) or may preferably contain two or more (most preferably two) polypropylene homopolymer components, which are prepared in a sequence of at least two (most preferably two) polymerization reactors (so-called reactor-blending).

Thus, the single site catalyzed PPH is preferably a bimodal SSC PPH consisting of a first PPH component (PPH-C1) and a second PPH component PPH-C2, wherein the PPH-C1 and the PPH-C2 each have a $MFR_2$ (230°C, 2.16 kg, ISO 1133) in the range of 3.0 to 37.0 g/10min, preferably 5.0 to 34.0 g/10min, more preferably 9.0 to 32.0 g/10min, most preferably 16.0 to 29.0 g/10min.

The term "bimodal" in the context of bimodal SSC PPH means herein bimodality with respect to melt flow rate ($MFR_2$) of the SSC PPH components PPH-C1 and PPH-C2, i.e. the first component (PPH-C1) and a second component

PPH-C2 have different MFR values. That is, the components have been produced under different polymerization conditions resulting in different $MFR_2$. The bimodal SSC PPH is bimodal at least with respect to difference in $MFR_2$ of the polymer components (PPH-C1) and (PPH-C2), but can have further bimodality with respect to one or more further properties between the components (PPH-C1) and (PPH-C2), such as e.g. density, Mw, etc..

Preferably, the $MFR_2$ of the PPH-C2 is different from that of the PPH-C1, such that the ratio of the $MFR_2$ of PPH-C2 to the $MFR_2$ of PPH-C1 ($MFR_2$ (PPH-C2) / $MFR_2$ (PPH-C1)) is 1.01 to 2.00, more preferably 1.02 to 1.8, more preferably 1.03 to 1.5, most preferably 1.04 to 1.30.

The SSC PPH is preferably produced in a two-stage polymerization process, preferably comprising a slurry reactor (e.g. loop reactor), whereby the slurry (loop) reactor is connected in series to a gas phase reactor (GPR), wherein the PPH-C1 is produced in the slurry (loop) reactor and the PPH-C2 is produced in GPR in the presence of the PPH-C1 to produce the bimodal SSC PPH.

Such a process is in general described inter alia in WO 2016/198273, WO 2021/009189, WO 2021/009190, WO 2021/009191 and WO 2021/009192 and details of how to prepare single site (metallocene) catalysed bi- and multimodal polymers can be found in these references. A suitable and preferred process is the Borstar® process.

Conditions for operating a slurry reactor (e.g. loop reactor) and a GPR and how to adjust and fine-tune final polymer properties are known to the skilled person or can be determined by orientating experimentation. Preferred operation conditions in the slurry reactor may be as follows:

- temperature within the range of 55 to 95°C, more preferably 60 to 90°C, most preferably 65 to 85°C, e.g. 75±5°C,
- pressure within the range of 30 to 75 barg, more preferably 40 to 70 barg, most preferably 45 to 60 parg, e.g. 53±5 barg
- hydrogen can be added for controlling the molar mass in a manner known per se.

Preferred operation conditions in the GPR may be as follows:

- temperature within the range of 50 to 130°C, more preferably 60 to 100°C, most preferably 70 to 90°C, e.g. 80±5°C,
- pressure within the range of 5 to 45 barg, more preferably 15 to 40 barg, e.g. 25±5 barg,
- hydrogen can be added for controlling the molar mass in a manner known per se.

The bimodal SSC PPH is thus preferably made in a two-stage polymerization process applying a slurry (loop) - gas phase reactor (GPR) cascade, such that the PPH-C1 is made in the slurry reactor and the PPH-C2 is made in the GPR.

Such polymerization steps may preferably be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of the first component (PPH-C1). It is understood that the amount of polymer produced in the prepolymerization may be within 1 to 5 wt% in respect to the final SSC PPH.

The SSC PPH having the above properties can suitable and preferably be produced in the presence of a single site metallocene complex of formula (I):

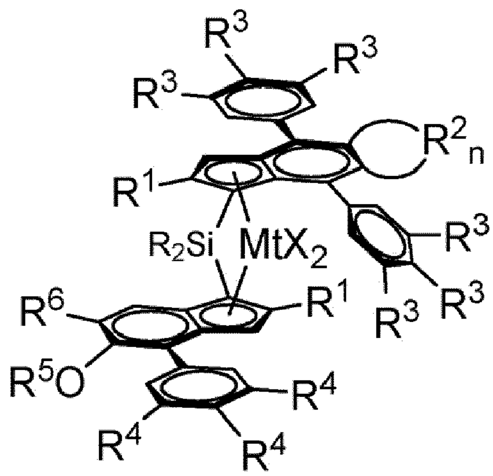

Formula (I)

wherein

Mt is Hf or Zr, preferably Zr;
each X is a sigma-ligand, preferably a chlorine, a benzyl or a methyl group, each $R^1$ independently is the same or can be different and is a $CH_2$-$R^7$ group, with $R^7$ being H, a linear or branched $C_{1-6}$ alkyl group, an $C_{3-8}$ cycloalkyl group, or an $C_{6-10}$ aryl group,
each $R^2$ is independently a -CH=, -CY=, -$CH_2$-, -CHY- or -$CY_2$- group, wherein Y is a $C_{1-10}$ hydrocarbyl group and n is 2-6,
each $R^3$ and $R^4$ is independently the same or can be different and is hydrogen, a linear or branched $C_{1-6}$-alkyl group, an OZ group, wherein Z is a $C_{1-4}$ hydrocarbyl group, a $C_{7-20}$ arylalkyl, a $C_{7-20}$ alkylaryl group or a $C_{6-20}$ aryl group, wherein at least one $R^3$ per phenyl group and at least one $R^4$ is not hydrogen, and optionally two adjacent $R^3$ or $R^4$ groups can be part of a ring including the phenyl carbons to which they are bonded,
$R^5$ is a linear or branched $C_{1-6}$ alkyl group, $C_{7-20}$ arylalkyl, $C_{7-20}$ alkylaryl group or $C_{6-20}$ aryl group,
$R^6$ is a $C(R^8)_3$ group, with $R^8$ being a linear or branched $C_{1-6}$ alkyl group,
each R is independently a $C_{1-20}$ hydrocarbyl, $C_{6-20}$ aryl, $C_{7-20}$ arylalkyl or $C_{7-20}$ alkylaryl.

More preferably, the metallocene complex of formula (I) is a complex with the formula (Ia):

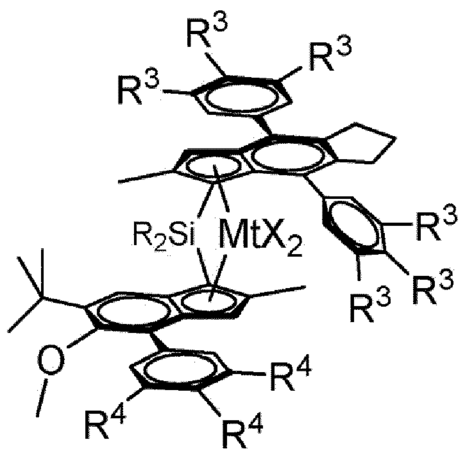

(Ia)

wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen.

Even more preferably, the metallocene complex used in the present invention is

rac-anti-dimethylsilanediyl[2-methyl-4,8-bis-(4'-*tert*-butylphenyl)-1,5,6,7-tetrahydro-s-indacen-1-yl] [2-methyl-4-(3',5'-dimethylphenyl)-5-methoxy-6-tert-butylinden-1-yl] zirconium dichloride, or
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride, or
rac-anti-dimethylsilanediyl[2-methyl-4,8-bis-(3',5'-dimethylphenyl)-1,5,6,7-tetrahydro-s-indacen-1-yl][2-methyl-4-(3',5'-di-*tert*-butylphenyl)-5-methoxy-6-tert-butylinden-1-yl] zirconium dichloride,
or their corresponding zirconium dimethyl analogues, and
wherein the metallocene complex is most preferably
rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride.

Further, the SSC PPH is preferably produced in the presence of the (above) single site metallocene complex and one or more co-catalysts, preferably including at least an aluminoxane, which is preferably methylaluminoxane (MAO), more preferably a combination of an alumoxane with a boron-based cocatalyst, most preferably MAO and trityl-tetrakis(pentafluorophenyl) borate.

The catalyst in the present invention can be used in supported or unsupported form, but is preferably used in supported form. The support material used is preferably an inorganic material, such as silica, alumina or zirconia or a mixed oxide such as silica-alumina, in particular silica, alumina or silica-alumina. The use of a silica support is more preferred. The person skilled in the art is aware of the procedures required to support a metallocene catalyst.

More details about how to synthesize the above preferred single site metallocene complex, about suitable co-catalysts and about suitable supports can be found e.g. in WO2019/179959 A1, which respective contents are herein included by way of reference.

**Additive(s) (B)**

The PPH composition of the present invention essentially contains the additive(s) selected from the group consisting of antioxidant(s), acid scavenger(s), UV-stabilizer(s), antistatic agent(s), and slip agent(s), and mixtures thereof. Notably, it is possible that two or more functions can be combined in the same molecule and such a constitution may be preferred to reduce the overall amount of additives.

Slip agents migrate to the surface and act as lubricants e.g. polymer to polymer and polymer against metal (e.g. mold, rollers etc.), giving reduced coefficient of friction (CoF) as a result. Examples are monoglyceride-based compounds (CAS No. 31566-31-1), fatty acid amids, like erucamide (CAS No. 112-84-5), oleamide (CAS No. 301-02-0), stearamide (CAS No. 124-26-5) or combinations thereof.

Antistatic agents can be ionic or nonionic. Ionic antistatic agents include cationic compounds, such as quaternary ammonium, phosphonium, or sulfonium salts, and anionic compounds, usually sodium salts of sulfonates, phosphates, and carboxylic acids. Nonionic antistatic agents include esters, such as glycerol esters of fatty acids, and ethoxylated tertiary amines. Suitable antistatic agents are, for example, monoglyceride-based compounds (CAS No. 31566-31-1), glycerol esters (CAS No. 97593-29- 8) or ethoxylated amines (CAS No. 71786-60-2 or 61791-31-9) or ethoxylated amides (CAS No. 204-393-1).

Preferably, by combining the functions of slip agents (mold release properties) and of anti-static agents, and due to compatibility with polypropylene and with injection molding applications, are monoglyceride-based compounds (CAS No. 31566-31-1, e.g. DIMODAN® HP (IFF's Nutrition & Biosciences, distilled monoglyceride made from edible, fully hydrogenated palm based oil).

Therefore, the additive(s) (B) preferably include antistatic agent(s), wherein the antistatic agent(s) is present in an amount of 0.07 to 2.00 wt%, preferably 0.10 to 1.50 wt%, more preferably 0.15 to 1.0 wt%, most preferably 0.20 to 0.60 wt% based on the PPH composition, and wherein the antistatic agent(s) preferably includes, more preferably is, a monoglyceride-based antistatic agent(s). In case of using the above monoglyceride-based compounds (e.g. CAS No. 31566-31-1), said antistatic agent already includes the function of a slip agent, which is preferred.

Examples of UV-stabilizers include, for example, ultraviolet light absorbers (UVA) and hindered-amine light stabilizers (HALS). Specific examples include bis-(2,2,6,6-tetramethyl-4-piperidyl)sebacate (CAS No. 52829-07-9, Tinuvin 770) and 2-hydroxy-4-n-octoxy-benzophenone (CAS No. 1843-05-6, Chimassorb 81). Also antioxidant(s) may additionally offer UV-stabilizing effect and can therefore be preferably used, such as e.g. pentaerythritol tetrakis [3-[3,5-di-tert-butyl-4-hydroxyphenyl] propionate (CAS-No. 6683-19-8).

Antioxidants interrupt the degradation processes in different ways. The two major classifications are chain terminating primary antioxidants and hydroperoxide decomposing secondary antioxidants. Primary antioxidants react rapidly with free radicals and are also called "radical scavengers". Primary antioxidants are typically given by sterically hindered phenols, whereas secondary antioxidants include e.g. phosphites and thioesters. The latter are particularly useful in synergistic combinations with primary antioxidants. Irgafos® 168, Irgafos® 126, Irganox® PS 800 and Irganox® PS 802 are exemplary secondary antioxidants. Moreover, in multifunctional stabilizers, several functions can be combined in the same molecule, and a widely used combination are sterically hindered phenols with sulfur substituents or sterically hindered phenols with copper chelating function (metal deactivators), such as Irganox® 1035, Irganox® 565, Irganox® 1520 L, Irganox® MD 1024.

Further examples of antioxidants are sterically hindered phenols (such as CAS No. 6683-19-8, e.g. Irganox 1010 (FF)™ by BASF), phosphorous based antioxidants (such as CAS No. 31570-04-4, also sold as Flostanox PAR 24 (FF)™ by Clariant, or Irgafos 168 (FF)™ by BASF), sulphur based antioxidants (such as CAS No. 693-36-7, sold as Irganox PS-802 (FF)™ by BASF), nitrogen-based antioxidants (such as 4,4'-bis(1 ,T-dimethylbenzyl)diphenylamine), or antioxidant blends.

Therefore, the additive(s) (B) preferably include at least antioxidant(s), wherein the antioxidant(s) is present in an amount of 0.10 to 2.50 wt%, preferably 0.30 to 1.80 wt%, more preferably 0.40 to 1.30 wt%, most preferably 0.50 to 1.10 wt% based on the PPH composition.

Further preferably, the antioxidant(s) include at least primary antioxidant(s), more preferably a combination of primary and secondary antioxidant(s), and the primary antioxidant(s) preferably includes, more preferably is, a phenolic-type antioxidant(s) (e.g. Irganox 1010 (FF)™ by BASF), wherein the primary antioxidant(s) is preferably present in an amount of 0.05 to 1.50 wt%, more preferably 0.08 to 1.10 wt%, more preferably 0.12 to 0.90 wt%, most preferably 0.25 to 0.60 wt% based on the PPH composition, the secondary antioxidant(s) preferably includes, more preferably is, an organophosphate antioxidant(s) and/or a thioester antioxidant(s), more preferably a mixture thereof (e.g. Irgafos 168 (FF)™ and Irganox PS-802 (FF)™), wherein the secondary antioxidant(s) is preferably present in an amount of 0.06 to 1.55 wt%, more preferably 0.10 to 1.12 wt%, more preferably 0.15 to 0.95 wt%, most preferably 0.28 to 0.65 wt% based on the PPH composition.

Acid scavengers are used to deactivate catalyst residues, primarily chlorides, and thus protect the polymer from unwanted degradation reactions being catalyzed by the presence of acidic species. While typical oxidation reactions can

be handled by antioxidants (see above), dedicated acid scavengers are preferably present in parallel. Preferably, acid scavenger(s) is used together with antioxidant(s) in order to be able to further improve long term and processing stability.

Examples of acid scavengers include calcium stearates (e.g. CAS No. 1592-23-0), sodium stearates (e.g. CAS-No. 822-16-2), zinc stearates (e.g. CAS No. 557-05-1), magnesium and zinc oxides, synthetic hydrotalcite (e.g. SHT, CAS No. 11097-59-9), lactates and lactylates. Preferably, by combining the functions of acid scavengers and slip agents (lubricating properties) are sodium stearates (e.g. CAS-No. 822-16-2).

Therefore, the additive(s) (B) preferably include acid scavenger(s), wherein the acid scavenger(s) is present in an amount of 0.005 to 0.100 wt%, preferably 0.008 to 0.090 wt%, more preferably 0.010 to 0.070 wt%, most preferably 0.025 to 0.050 wt% based on the PPH composition, and wherein the acid scavenger(s) preferably includes, more preferably is, sodium stearates. In case of using the sodium stearates (e.g. CAS-No. 822-16-2), said acid scavenger already includes the function of a slip agent, which is preferred.

**Component(s) (C)**

The PPH composition of the invention may optionally comprise one or more additional component(s) (C) (compounds and additives other than above additives (B)), such as e.g. utilization agents, polymer additives, fillers, nucleating agents, coloring agents, anti-block agents, processing aids, and modifiers commonly known in the art. However, care must be taken not to add any optional component(s) in addition to the essential components SSC PPH (A) and additives (B), which interfere with attaining the claimed properties of the PPH composition.

That is, since in the individual case e.g. nucleating agents might significantly change the crystallization properties of the PPH being associated with SW behavior of the PPH and since e.g. certain pigments/fillers/antiblocking agents might have negative impact regarding SW resistance, it is important to the performance of the invention that the PPH composition of the present invention does not contain any optional component(s) (C) which impair with attaining the essential characteristics of the above SSC PPH and the PPH composition as defined in detail above.

**Use of the polypropylene homopolymer (PPH) composition and Article**

The present invention relates to the use of the above PPH composition for producing an article by molding, i.e. a molded article (preferably injection-molded article).

The present invention further relates to an article comprising the above PPH composition. Preferably, at least 80 wt%, more preferably at least 90 wt%, more preferably at least 95 wt% of the article is made of the PPH composition described above and it also possible and preferred that the article is made of, i.e. consists of the PPH composition.

Preferably, the article is a molded article. Appropriate molding processes for preparing the molded article of the present invention are commonly known to the skilled person. Preferably, the molded article is prepared by injection molding, injection blow molding, injection stretch blow molding, thin wall injection molding, high speed injection molding, or any combination thereof. More preferably, it is an injection molded article, an injection blow molded article, or an injection stretch blow molded article, and most preferably, the molded article is an injection molded article.

The molded article can comprises one or more three-dimensionally curved areas (i.e. is not entirely flat) and may be rigid.

Since the PPH composition used to form the article is improved in terms of SW resistance and shows favorable mechanical properties, the present PPH composition can favorably be used for such demanding and other applications.

Further, the molded article of the present invention is useful e.g. for automotive applications, packaging applications (e.g. rigid packaging, transport packaging, etc.), caps and closures (hinge caps), appliances, house ware, or bottles. The article is more preferably selected from major appliances, consumer electronics and small appliances, most preferably small appliances. Non-limiting Examples of small appliances include microwave ovens, kettles, waffle irons, toasters, humidifiers, food processors and coffeemakers. Non-limiting Examples of major appliances include refrigerators, dishwashers, washing machines and tumble dryer.

**Examples**

**1. Measuring methods**

The following definitions of terms and determination methods apply for the above general description of the invention as well as to the below examples unless otherwise defined.

**Melt flow rate (MFR)**

The melt flow rate (MFR) was determined according to ISO 1133 and is indicated in g/10 min. The MFR is an

indication of the flowability, and hence the processability, of the polymer. The higher the melt flow rate, the lower the viscosity of the polymer. The MFR was determined at 230°C for polypropylene and polypropylene compositions. MFR may be determined at different loadings such as 2.16 kg ($MFR_2$), 5 kg ($MFR_5$) or 21.6 kg ($MFR_{21}$).

If the MFR (e.g. $MFR_2$) of a polymer component, e.g. second component PPH-C2, cannot be measured, because it cannot be isolated from the mixture of the first component PPH-C1 and the second component PPH-C2, then it can be calculated as follows:

Calculation of $MFR_2$ of component PPH-C2:

$$logA = x \cdot logB + (1-x) \cdot logC$$

$$C = 10^{\wedge}\frac{(logA - x.logB)}{(1-x)}$$

For component PPH-C2:

B = $MFR_2$ of first component PPH-C1
C = $MFR_2$ of second component PPH-C2
A = final $MFR_2$ (mixture) of loop polymer (=SSC PPH)
X = weight fraction of the first component PPH-C1

**Xylene cold soluble content (XCS, wt%)**

The amount of the polymer soluble in xylene was determined at 25°C according to ISO 16152; 5th edition; 2005-07-01.

**DSC analysis, melting temperature (Tm), melting enthalpy (Hm), crystallization temperature (Tc) and crystallization enthalpy (Hc)**

DSC analysis was performed with a TA Instrument Q200 differential scanning calorimetry (DSC) on 5 to 7 mg samples. DSC is run according to ISO 30 11357 / part 3 /method C2 in a heat / cool / heat cycle with a scan rate of 10 °C/min in the temperature range of -30 to +225°C. Crystallization temperature (Tc) and crystallization enthalpy (Hc) were determined from the cooling step, while melting temperature (Tm) and melting enthalpy (Hm) were determined from the second heating step respectively from the first heating step in case of the webs.

**Flexural Modulus (FM)**

The flexural modulus was determined in 3-point-bending at 23°C according to ISO 178 on 80x10x4 mm3 test bars injection molded in line with EN ISO 19069-2.

**Stress whitening (SW)**

Stress whitening was determined by a modified three point bending test, namely the reversed three point bending test (cf. Fig. 1).

The reversed three point bending test was carried out on a universal testing machine (Zwick Z010) at 50 mm/min. The samples were 2 mm thick injection molded UL94 specimens (125x12.5x2mm).

The experimental set-up consists of the reversed three point bending test coupled with an optical detection system.

The mechanical set up consists of:

A fix part (1), with a span (2) of 40 mm, a moving part including a loading edge (3) with a light source (4) and an optical sensor (5) fixed on the moving part closely above and beneath the specimen (6) by a vertical rod. This ensures that the distance between light source and optical sensor remains constant during the test, which is a prerequisite for a good reproducibility of the measurements.

The force-deflection and the optical signal-deflection curves are recorded. At the beginning of the test, the optical signal (7) is calibrated to 100 % (7a), regardless of the initial transparency/haziness of the inserted sample.

Occurrence of stress whitening is correlated with a sharp drop in the optical signal-deflection curve (cf. Fig. 2).

Three different parameters were determined:

a) Stress whitening angle,
b) Residual size (width) of the blushing zones
c) Stress whitening intensity
a) The stress whitening angle [°], (also: bending angle or onset-angle) indicates, at which bending angle stress whitening (SW) occurs. The occurrence of stress whitening is correlated with a sharp drop of the optical response (light transmission) during bending (cf. Fig. 2).

The onset angle for stress whitening is determined according to formula (VI):

$$\text{Onset angle} = \left(3*10^{-5}*\ s^{4}\right)-\left(2.1*10^{-3}*\ s^{3}\right)-\left(3.48*10^{-2}*\ s^{2}\right)+(6.4591*s)-0.9997 \quad \text{(VI)}$$

wherein
"s" denominates the deflection of the loading edge, at which the light transmission curve drops and is determined as illustrated in Fig. 2.

At the beginning of the test, the optical signal (7) is calibrated to 100% (7a), regardless of the initial transparency/haziness of the inserted sample. The deflection of the loading edge (s), at which the light transmission curve drops is determined by the abscissa-value (8) of the intersection between the tangent of the slope of the optical signal (7b) and the 100% line of the initial optical signal (7a).

b) Residual size (width) of the blushing zones immediately after a bending of 90°, measured in [mm], also denominated as "Res-SW 90°" or "residual stress whitening";
The width of a blushing zone (b) is determined as follows:
Tests are conducted to a deflection corresponding to an angle of 90° according to the formula (VI) above. Then the specimen is abruptly unloaded with a crosshead speed of 400 mm/min. The width of the blushing area is measured immediately after testing using a slide gage.

c) Stress whitening intensity: this is the residual intensity of the blushing zone immediately after a bending of 90° (visual appreciation from 0 to 5, with 0: no remaining blush, 5: intensive whitening), also denominated as "SW-intensity".

Evaluation of the stress whitening intensity:

A mark of 0 is attributed when there is no residual blushing; a note of 5 when the whitening of the deformed zone is extremely pronounced. The obtained value is entered manually in a result sheet; average calculations are automated. The determination of these parameters is somewhat subjective and dependent on an operator. Although the obtained values are somewhat subjective, they give essential information on the elastic recovery potential of the material.

What is important to notice, is:

a. an intensity of 0 is remarkably low (i.e. no blushing visible)
b. an intensity of up to 1 is excellent,
c. an intensity between 1.1 and 1.5 is good;
d. an intensity between 1.6 and 3 is acceptable;
e. an intensity higher than 3 is insufficient.

**Fogging**

Fogging means the evaporation of volatiles matters of trim materials of molded article. The measurements were done on compression molded specimens (diameter 80 mm +/- 1mm, thickness 2 mm) according to ISO 75201, method B. This method evaluates the volatility of organic constituents by gravimetric measurements. The samples were dried at room temperature for 24 h using silica gel in a desiccator. The test was done at 100°C. The beakers have to be closed by using tarred aluminum foils (diameter 103 mm, thickness 0.03 mm) and glass plates and the cooling plates on top. After the testing time (16 h at 100°C), the glass plates have to be removed (not usefully anymore at this method), the aluminum foils are removed and weighted back. The gravimetric Fogging value "G" (%) is determined by the following equation:

Gj = aluminum foil after Fogging test – tara of the aluminum foil, in mg

G sample = Average in mg of the 2 foils used for each sample

**GPC (Mw, Mn, MWD)**

Number average molecular weight (Mn), weight average molecular weight (Mw) and polydispersity (Mw/Mn, MWD) were determined by Gel Permeation Chromatography (GPC) according to the following method:

The weight average molecular weight Mw and the polydispersity (Mw/Mn, wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscometer was used with 3×TSK-gel columns (GMHXL-HT) from TosoHaas and 1,2,4-trichlorobenzene (TCB, stabilized with 200 mg/L 2,6-di tert butyl-4-methyl-phenol) as solvent at 145°C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well-characterized broad polypropylene standards. All samples were prepared by dissolving 5-10 mg of polymer in 10 mL (at 160°C) of stabilized TCB (same as mobile phase) and keeping for 3 hours with continuous shaking prior sampling in into the GPC instrument.

**Quantitative nuclear-magnetic resonance (NMR) spectroscopy used to quantify the isotacticity and regio-regularity of polypropylene homopolymer**

Quantitative nuclear-magnetic resonance (NMR) spectroscopy was used to quantify the isotacticity and regio-regularity of the polypropylene homopolymers.

Quantitative $^{13}C\{^1H\}$ NMR spectra were recorded in solution-state using a Bruker Advance III 400 NMR spectrometer operating at 400.15 MHz and 100.62 MHz for $^1H$ and $^{13}C$ respectively. All spectra were recorded using a $^{13}C$ optimized 10 mm extended temperature probehead at 125°C using nitrogen gas for all pneumatics.

For polypropylene homopolymers, approximately 200 mg of material was dissolved in *1,2*-tetrachloroethane-$d_2$ (TCE-$d_2$). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilizing the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects on the quantification of the tacticity distribution was corrected for by subtraction of representative regio-defect integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})/2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The molar percent of 2,1 erythro regio-defects was quantified with respect to all propene:

$$[21e] \text{ mol\%} = 100 * (P_{21e} / P_{total})$$

**Experimental part**

**Catalyst CA-IE for Inventive Example (IE)**

Catalyst complex

The metallocene complex rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride has been used as described in WO 2019/179959 A1 (MC-2).

Preparation of MAO-silica support

A steel reactor equipped with a mechanical stirrer and a filter net was flushed with nitrogen 10 and the reactor temperature was set to 20°C. Next silica grade DM-L-303 from AGC Si-Tech Co, pre-calcined at 600°C (5.0 kg) was added from a feeding drum followed by careful pressuring and depressurizing with nitrogen using manual valves. Then toluene (22 kg) was added. The mixture was stirred for 15 min. Next 30 wt% solution of methylaluminoxane (MAO) in toluene (9.0 kg) from Lanxess was added via feed line on the top of the reactor within 70 min. The reaction mixture was then heated up to 90°C and stirred at said temperature for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60° under nitrogen flow for 2 hours and then for 5 hours under vacuum (-0.5 barg) with stirring. MAO treated support was collected as a free-flowing white powder found to contain 12.2 wt% Al.

Single site catalyst system preparation

30 wt% MAO in toluene (0.7 kg) was added into a steel nitrogen blanked reactor via a burette at 20°C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under nitrogen flow at 60°C for 2h and additionally for 5 h under vacuum (-0.5 barg) under stirring.

**Catalyst CA-C for Comparative Example (CE)**

Ziegler Natta catalyst commercially available from Lyondell Basell under the tradename Avant ZN180 was used.

**Polymerization of inventive polypropylene homopolymer (SSC PPH)**

The single site catalyzed polypropylene homopolymer (SSC PPH) of the inventive example is a bimodal copolymer which was produced in a Borstar® pilot plant with a 2-reactor set-up (loop - GPR1) and a prepolymerization loop reactor by using the polymerization conditions as given in Table 1 below.

Table 1: Polymerization conditions

| | | **SSC PPH** |
|---|---|---|
| **catalyst** | | CA-IE |
| **PREPOLY** | | |
| temperature | °C | 20 |
| H2 feed | g/h | 0.10 |
| C3 feed | kg/h | 60 |
| C2 feed | kg/h | 0 |
| press. reactor | barg | 53 |
| **LOOP** | | |
| $MFR_2$ | g/10min | 21 |
| pressure | barg | 53 |
| temperature | °C | 75 |
| H2/C3 | mol/kmol | 0.35 |
| XCS | w t% | 0.30 |
| matrix split | % | 50% |
| **GPR1** | | - |
| $MFR_2$ | g/10min | 19.6 |
| temperature | °C | 80 |
| pressure | barg | 25 |
| H2/C3 | mol/kmol | 1.52 |
| XCS | wt% | 0.20 |
| matrix split | % | 50% |
| **Final Powder** | | |
| $MFR_2$ | g/10min | 20.30 |
| MWD | | 3.5 |
| XCS | wt% | 0.2 |
| Tm | °C | 152 |
| Regio-defects | mol% | 0.8 |

The SSC PPH manufactured as above was compounded with the recipe according to Table 2 to give the polymer composition of the present invention (IE). The compounding was done on a ZSK 18 twin screw extruder, melt temperature 210°C, throughput 7 kg/h. The catalyst feed rate depends on productivity and production rate and the catalyst is fed to prepolymerization only since it continues in the process. In the present case, it is about 4 g/h. Table 2 also shows the properties of IE and CE.

The CE polypropylene homopolymer is produced in a pilot plant, with loop only. The donor used is donor C (CAS No. 17865-32-6). The typical condition: TEAL 170 g/t propylene, Donor 11 g/t propylene. Reactor pressure 36.5 Barg, temperature 71°C, H2 2000 ppm. The powder has $MFR_2$ 23 g/10min, regio defects 0 mol%, Tm 162°C, XCS 3.4 wt%.

The powder was compounded with the same additives and same condition as IE.

Table 2. Recipe and properties of IE and CE

| | | IE | CE |
|---|---|---|---|
| SSC PPH | wt% | 98.96 | 98.96 |
| AS | wt% | 0.04 | 0.04 |
| AO1 | wt% | 0.10 | 0.10 |
| AO2 | wt% | 0.27 | 0.27 |
| ASA | wt% | 0.30 | 0.30 |
| AO3 | wt% | 0.33 | 0.33 |
| | | | |
| $MFR_2$ | g/10min | 19 | 20 |
| Tc | °C | 118.5 | 113 |
| Tm | °C | 154 | 162 |
| Hm | J/g | 102 | 108 |
| SW intensity | | 1 | 4 |
| FM | MPa | 1492 | 1502 |
| Fogging | mg | 0.67 | 1.07 |

AS: sodium stearate (CAS-No. 822-16-2)
AO1: tris(2,4-di-tert-butylphenyl) phosphite (CAS-No. 31570-04-4)
AO2: distearyl thiodipropionate (CAS-No. 693-36-7)
AO3: pentaerythritol tetrakis [3-[3,5-di-tert-butyl-4-hydroxyphenyl] propionate (CAS-No. 6683-19-8)
ASA: monoglyceride-based antistatic agent (Dimodan® HP MB)

As can be seen from the above, with same $MFR_2$, the IE, which is produced using the specific single site catalyst and being adjusted to a specific polymer setup, has similar flexural modulus (FM), but unexpectedly achieves a step change in fogging and SW intensity, which is appreciated by the present invention.

## Claims

**1.** A polypropylene homopolymer (PPH) composition suitable for small appliances, which comprises

(A) 95.00 to 99.99 wt% based on the PPH composition of a single site catalyzed (SSC) polypropylene homopolymer (SSC PPH), wherein the SSC PPH has

- a xylene cold solubles (XCS) content (25°C, ISO 16152) of 0.1 to 1.5 wt%,
- a melt flow rate ($MFR_2$) (230°C, 2.16 kg, ISO 1133) of 0.1 to 40.0 g/10min,
- a melting temperature (Tm) (DSC) of 149.0 to 160.0°C, and
- regio-defects ($^{13}$C-NMR spectroscopy) in an amount of 0.05 to 1.20 mol%,

(B) 0.01 to 5.00 wt% based on the PPH composition of additive(s) selected from the group consisting of antioxidant(s), acid scavenger(s), UV-stabilizer(s), antistatic agent(s), and slip agent(s), and mixtures thereof,

wherein the PPH composition has

- a $MFR_2$ (230°C, 2.16 kg, ISO 1133) of 0.2 to 40.0 g/10min,
- a Tm (DSC) of 152.0 to 162.0°C,
- a flexural modulus (FM) (ISO 178) of more than 1300 MPa to 1700 MPa or less,
- a stress whitening (SW) intensity, as determined according to the description, of 0 or more and less than 3.0, and
- a fogging (ISO 75201, method B) of 0.10 or more and less than 0.90 mg.

**2.** The polypropylene homopolymer (PPH) composition according to claim 1, wherein the PPH composition comprises 97.00 to 99.70 wt%, preferably 98.00 to 99.50 wt%, more preferably 98.50 to 99.30 wt% based on the total weight the PPH composition of SSC PPH (A) and 0.30 to 3.00 wt%, preferably 0.50 to 2.00 wt%, more preferably 0.70 to 1.50 wt% based on the total weight of the PPH composition of the additive(s) (B).

**3.** The polypropylene homopolymer (PPH) composition according to claim 1 or 2, wherein the PPH composition has

- a $MFR_2$ (230°C, 2.16 kg, ISO 1133) of 2.0 to 35.0 g/10min, preferably 4.0 to 32.0 g/10min, more preferably 8.0 to 30.0 g/10min, most preferably 12.0 to 28.0 g/10min, and/or
- a Tm (DSC) of 152.0 to 161.0°C, preferably 153.0 to 160.0°C, and/or
- a FM (ISO 178) of 1350 to 1650 MPa, preferably 1400 to 1600 MPa, more preferably 1450 to 1550 MPa, most preferably 1480 to 1520 MPa, and/or
- a SW intensity of 0.1 to 2.5, preferably 0.2 to 2.0, more preferably 0.2 to 1.5, most preferably 0.2 to 1.0, and/or
- a fogging (ISO 75201, method B) of 0.10 to 0.80 mg, preferably 0.20 to 0.75 mg, more preferably 0.30 to 0.70 mg, and/or
- a crystallization temperature (Tc) (DSC) of 112.0 to 130.0°C, preferably 113.5 to 125.0°C, more preferably 115.0 to 123.0°C, most preferably 117.0 to 121.0°C, and/or
- melt enthalpy (Hm) (DSC) of 95.0 to 110.0 J/g, preferably 98.0 to 107.0 J/g, more preferably 99.0 to 105.0 J/g, most preferably 100.0 to 103.0 J/g.

**4.** The polypropylene homopolymer (PPH) composition according to any one of claims 1 to 3, wherein the SSC PPH has

- a XCS content (25°C, ISO 16152) of 1.2 wt% or less, preferably 0.9 wt% or less, more preferably 0.7 wt% or less, more preferably 0.4 wt% or less, most preferably 0.3 wt% or less, and/or
- a $MFR_2$ (230°C, 2.16 kg, ISO 1133) of 2.5 to 36.0 g/10min, preferably 4.5 to 33.0 g/10min, more preferably 8.5 to 31.0 g/10min, most preferably 15.0 to 29.0 g/10min, and/or
- a Tm (DSC) of 149.0 to 158.0°C, preferably 150.0 to 157.0°C, more preferably 151.0 to 155.0°C, and/or
- a polydispersity MWD (GPC) in the range of 2.0 to 5.5, preferably 2.5 to 5.0, more preferably 3.0 to 4.0, and/or
- regio-defects ($^{13}$C-NMR spectroscopy) in an amount of 0.30 to 1.10 mol%, preferably 0.40 to 1.00 mol%, more preferably 0.60 to 1.00 mol%, most preferably 0.70 to 0.90 mol%.

**5.** The polypropylene homopolymer (PPH) composition according to any one of claims 1 to 4, wherein the SSC PPH is a bimodal SSC PPH consisting of a first PPH component (PPH-C1) and a second PPH component PPH-C2, wherein the PPH-C1 and the PPH-C2 each have a $MFR_2$ (230°C, 2.16 kg, ISO 1133) in the range of 3.0 to 37.0 g/10min, preferably 5.0 to 34.0 g/10min, more preferably 9.0 to 32.0 g/10min, most preferably 16.0 to 29.0 g/10min, and wherein the $MFR_2$ of the PPH-C2 is different from that of the PPH-C1, preferably such that the ratio of the $MFR_2$ of PPH-C2 to the $MFR_2$ of PPH-C1 ($MFR_2$ (PPH-C2) / $MFR_2$ (PPH-C1)) is 1.01 to 2.00, more preferably 1.02 to 1.8, more preferably 1.03 to 1.5, most preferably 1.04 to 1.30.

**6.** The polypropylene homopolymer (PPH) composition according to claim 5,
wherein the bimodal SSC PPH is made in a two-stage polymerization process applying a slurry - gas phase reactor (GPR) cascade, such that the PPH-C1 is made in the slurry reactor and the PPH-C2 is made in the GPR.

**7.** The polypropylene homopolymer (PPH) composition according to any one of claims 1 to 6, wherein the SSC PPH is produced in the presence of a single site metallocene complex of formula (I):

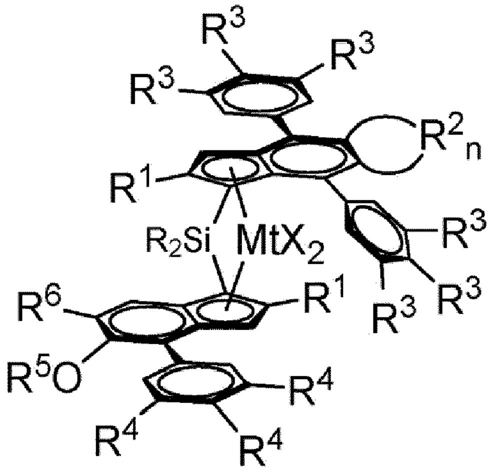

Formula (I)

wherein

Mt is Hf or Zr, preferably Zr;
each X is a sigma-ligand, preferably a chlorine, a benzyl or a methyl group, each $R^1$ independently is the same or can be different and is a $CH_2$-$R^7$ group, with $R^7$ being H, a linear or branched $C_{1-6}$ alkyl group, an $C_{3-8}$ cycloalkyl group, or an $C_{6-10}$ aryl group,
each $R^2$ is independently a -CH=, -CY=, -$CH_2$-, -CHY- or -$CY_2$- group, wherein Y is a $C_{1-10}$ hydrocarbyl group and n is 2-6,
each $R^3$ and $R^4$ is independently the same or can be different and is hydrogen, a linear or branched $C_{1-6}$-alkyl group, an OZ group, wherein Z is a $C_{1-4}$ hydrocarbyl group, a $C_{7-20}$ arylalkyl, a $C_{7-20}$ alkylaryl group or a $C_{6-20}$ aryl group, wherein at least one $R^3$ per phenyl group and at least one $R^4$ is not hydrogen, and optionally two adjacent $R^3$ or $R^4$ groups can be part of a ring including the phenyl carbons to which they are bonded,
$R^5$ is a linear or branched $C_{1-6}$ alkyl group, $C_{7-20}$ arylalkyl, $C_{7-20}$ alkylaryl group or $C_{6-20}$ aryl group,
$R^6$ is a $C(R^8)_3$ group, with $R^8$ being a linear or branched $C_{1-6}$ alkyl group,
each R is independently a $C_{1-20}$ hydrocarbyl, $C_{6-20}$ aryl, $C_{7-20}$ arylalkyl or $C_{7-20}$ alkylaryl.

**8.** The polypropylene homopolymer (PPH) composition according to claim 7, wherein the metallocene complex of formula (I) is a complex with the formula (Ia):

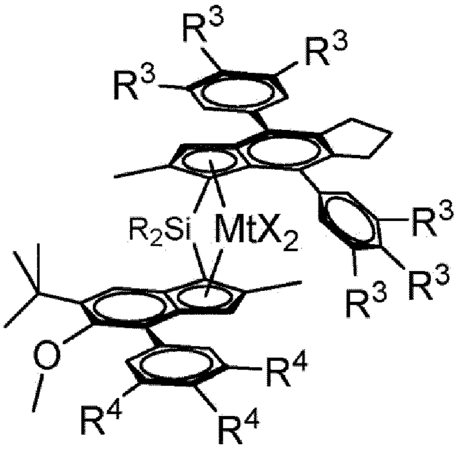

(Ia)

wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen.

**9.** The polypropylene homopolymer (PPH) composition according to claim 7 to 8, wherein the metallocene complex is rac-anti-dimethylsilanediyl[2-methyl-4,8-bis-(4'-*tert*-butylphenyl)-1,5,6,7-tetrahydro-s-indacen-1-yl][2-methyl-4-(3',5'-dimethylphenyl)-5-methoxy-6-*tert*-butylinden-1-yl] zirconium dichloride, or

rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride, or rac-anti-dimethylsilanediyl[2-methyl-4,8-bis-(3',5'-dimethylphenyl)-1,5,6,7-tetrahydro-s-indacen-1-yl][2-methyl-4-(3',5'-di-*tert*-butylphenyl)-5-methoxy-6-tert-butylinden-1-yl] zirconium dichloride,
or their corresponding zirconium dimethyl analogues, and
wherein the metallocene complex is preferably rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-*tert*-butylinden-1-yl] zirconium dichloride.

**10.** The polypropylene homopolymer (PPH) composition according to any one of claims 1 to 9, wherein the additive(s) (B) include at least antioxidant(s), wherein the antioxidant(s) is present in an amount of 0.10 to 2.50 wt%, preferably 0.30 to 1.80 wt%, more preferably 0.40 to 1.30 wt%, most preferably 0.50 to 1.10 wt% based on the PPH composition.

**11.** The polypropylene homopolymer (PPH) composition according to any one of claims 1 to 10, wherein the antioxidant(s) include at least primary antioxidant(s), preferably a combination of primary and secondary antioxidant(s), and

wherein the primary antioxidant(s) preferably includes, more preferably is, a phenolic-type antioxidant(s), wherein the primary antioxidant(s) is preferably present in an amount of 0.05 to 1.50 wt%, more preferably 0.08 to 1.10 wt%, even more preferably 0.12 to 0.90 wt%, most preferably 0.25 to 0.60 wt% based on the PPH composition,
wherein the secondary antioxidant(s) preferably includes, more preferably is, an organophosphate antioxidant(s) and/or a thioester antioxidant(s), more preferably a mixture thereof, wherein the secondary antioxidant(s) is preferably present in an amount of 0.06 to 1.55 wt%, more preferably 0.10 to 1.12 wt%, even more preferably 0.15 to 0.95 wt%, most preferably 0.28 to 0.65 wt% based on the PPH composition.

**12.** The polypropylene homopolymer (PPH) composition according to any one of claims 1 to 11, wherein the additive(s) (B) include antistatic agent(s), wherein the antistatic agent(s) is present in an amount of 0.07 to 2.00 wt%, preferably 0.10 to 1.50 wt%, more preferably 0.15 to 1.0 wt%, most preferably 0.20 to 0.60 wt% based on the PPH composition, and

wherein the antistatic agent(s) preferably includes, more preferably is, a monoglyceride-based antistatic agent(s), and/or
wherein the additive(s) (B) include acid scavenger(s), wherein the acid scavenger(s) is present in an amount of 0.005 to 0.100 wt%, preferably 0.008 to 0.090 wt%, more preferably 0.010 to 0.070 wt%, most preferably 0.025 to 0.050 wt% based on the PPH composition, and
wherein the acid scavenger(s) preferably includes, more preferably is, stearate-based acid scavenger(s).

**13.** Use of the polypropylene homopolymer (PPH) composition according to any one of claims 1 to 12 for producing an article by molding, preferably by injection molding.

**14.** Article, comprising the polypropylene homopolymer (PPH) composition according to any one of claims 1 to 12.

**15.** Article according to claim 14, wherein the article is a molded article, preferably an injection molded article, and wherein the article is more preferably selected from major appliances and small appliances, most preferably small appliances.

Fig. 1

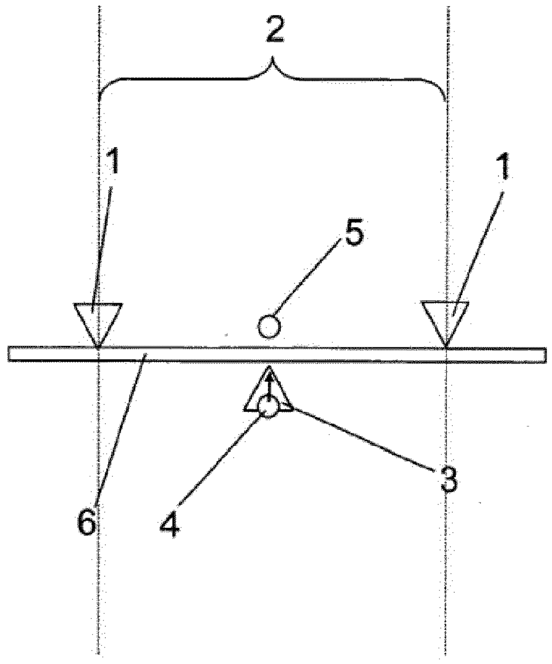


Fig. 2

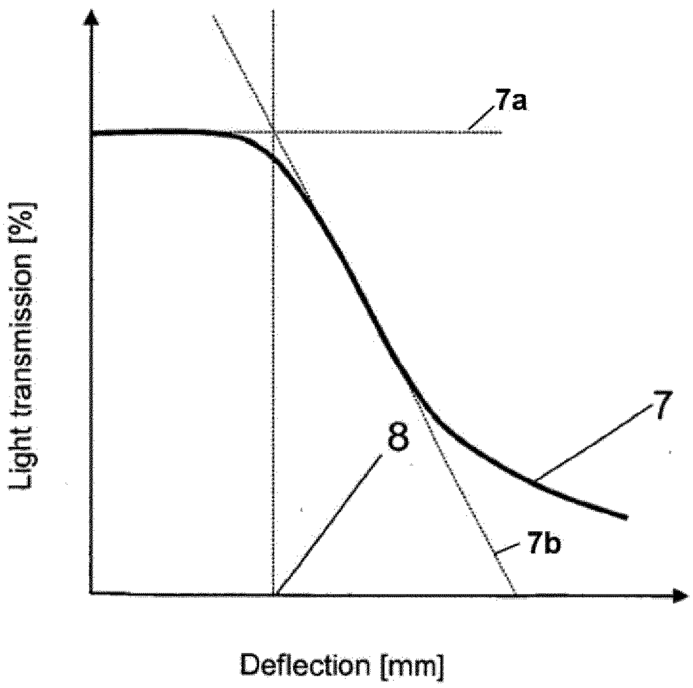

Europäisches Patentamt
European Patent Office
Office européen des brevets

# EUROPEAN SEARCH REPORT

Application Number
EP 23 18 4991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/239810 A1 (BOREALIS AG [AT]) 2 December 2021 (2021-12-02) * page 7, paragraph 1st full; claims 1-3,5, 7, 8, 10, 11; example 1; table 1 * ----- | 1-6, 10-15 | INV. C08F110/06 C08F4/6592 C08F4/659 |
| X | EP 3 916 023 A1 (BOREALIS AG [AT]) 1 December 2021 (2021-12-01) * paragraph [0047]; claims 1-4, 6, 8, 11, 12; example 1; table 1 * ----- | 1-6, 10-15 | |
| X | WO 2020/160892 A1 (BOREALIS AG [AT]) 13 August 2020 (2020-08-13) * claim 1; examples 1-3; tables 1, 2; compounds PP-1, PP-2, PP-4 * * page 10 - page 14 * * page 36, paragraph bridging - page 37 * * page 39 * ----- | 1-15 | |
| T | WO 2017/144466 A1 (SABIC GLOBAL TECHNOLOGIES BV [NL]) 31 August 2017 (2017-08-31) * page 1, line 27 - line 28 * * page 18, line 25 - line 29 * * claim 1 * ----- | | TECHNICAL FIELDS SEARCHED (IPC) C08F C08K C08L |

The present search report has been drawn up for all claims

| Place of search | Date of completion of the search | Examiner |
|---|---|---|
| Munich | 14 December 2023 | Bernhardt, Max |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 18 4991

This annex lists the patent family members relating to the patent documents cited in the above-mentioned European search report. The members are as contained in the European Patent Office EDP file on
The European Patent Office is in no way liable for these particulars which are merely given for the purpose of information.

14-12-2023

| Patent document cited in search report | Publication date | Patent family member(s) | Publication date |
|---|---|---|---|
| WO 2021239810 A1 | 02-12-2021 | BR 112022024109 A2 | 20-12-2022 |
| | | CN 115698100 A | 03-02-2023 |
| | | EP 4157890 A1 | 05-04-2023 |
| | | KR 20230017262 A | 03-02-2023 |
| | | WO 2021239810 A1 | 02-12-2021 |
| EP 3916023 A1 | 01-12-2021 | BR 112022020045 A2 | 13-12-2022 |
| | | CN 115667323 A | 31-01-2023 |
| | | EP 3916023 A1 | 01-12-2021 |
| | | JP 2023527016 A | 26-06-2023 |
| | | US 2023203334 A1 | 29-06-2023 |
| | | WO 2021239822 A1 | 02-12-2021 |
| WO 2020160892 A1 | 13-08-2020 | CN 113474406 A | 01-10-2021 |
| | | EP 3921365 A1 | 15-12-2021 |
| | | KR 20210102956 A | 20-08-2021 |
| | | PL 3921365 T3 | 03-07-2023 |
| | | US 2022135714 A1 | 05-05-2022 |
| | | WO 2020160892 A1 | 13-08-2020 |
| WO 2017144466 A1 | 31-08-2017 | CN 108699307 A | 23-10-2018 |
| | | EP 3420027 A1 | 02-01-2019 |
| | | US 2019062542 A1 | 28-02-2019 |
| | | WO 2017144466 A1 | 31-08-2017 |
| | | WO 2017144468 A1 | 31-08-2017 |
| | | WO 2017144475 A1 | 31-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0768338 B1
- WO 2020104145 A1
- WO 2016198273 A
- WO 2021009189 A
- WO 2021009190 A
- WO 2021009191 A
- WO 2021009192 A
- WO 2019179959 A1


### Non-patent literature cited in the description


- *CHEMICAL ABSTRACTS*, 112-84-5
- *CHEMICAL ABSTRACTS*, 301-02-0
- *CHEMICAL ABSTRACTS*, 124-26-5
- *CHEMICAL ABSTRACTS*, 31566-31-1
- *CHEMICAL ABSTRACTS*, 97593-29- 8
- *CHEMICAL ABSTRACTS*, 71786-60-2
- *CHEMICAL ABSTRACTS*, 204-393-1
- *CHEMICAL ABSTRACTS*, 52829-07-9
- *CHEMICAL ABSTRACTS*, 1843-05-6
- *CHEMICAL ABSTRACTS*, 6683-19-8
- *CHEMICAL ABSTRACTS*, 31570-04-4
- *CHEMICAL ABSTRACTS*, 693-36-7
- *CHEMICAL ABSTRACTS*, 1592-23-0
- *CHEMICAL ABSTRACTS*, 822-16-2
- *CHEMICAL ABSTRACTS*, 557-05-1
- *CHEMICAL ABSTRACTS*, 11097-59-9
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromolecules*, 1997, vol. 30, 6251
- **ZHOU, Z.** ; **KUEMMERLE, R** ; **QIU, X.** ; **REDWINE, D.** ; **CONG, R.** ; **TAHA, A.** ; **BAUGH, D** ; **WINNIFORD, B.** *J. Mag. Reson*, 2007, vol. 187, 225
- **BUSICO, V.** ; **CARBONNIERE, P.** ; **CIPULLO, R.** ; **PELLECCHIA, R** ; **SEVERN, J.** ; **TALARICO, G.** *Macromol. Rapid Commun*, 2007, vol. 28, 11289
- **RESCONI, L.** ; **CAVALLO, L.** ; **FAIT, A.** ; **PIEMONTESI, F.** *Chem. Rev*, 2000, vol. 100, 1253
- *CHEMICAL ABSTRACTS*, 17865-32-6